# EUROPÄISCHE PATENTSCHRIFT

(11) **EP 0 990 052 B1**
(45) Veröffentlichungstag und Bekanntmachung des Hinweises auf die Patenterteilung: **25.06.2003**
(21) Anmeldenummer: 98919184.6
(22) Anmeldetag: 28.03.1998
(51) Int. Cl.: C21B 13/00

(54) **VERFAHREN ZUM ERZEUGEN VON EISENCARBID AUS KÖRNIGEM EISENSCHWAMM**
METHOD FOR PRODUCING IRON CARBIDE FROM GRANULATED SPONGE IRON
PROCEDE DE PRODUCTION DE CARBURE DE FER A PARTIR DE FER SPONGIEUX GRANULE

(30) Priorität: 24.04.1997 DE 19717304
(43) Veröffentlichungstag der Anmeldung: 05.04.2000
(73) Patentinhaber: Outokumpu Oyj, 02200 Espoo (FI)
(72) Erfinder: HIRSCH, Martin, D-61381 Friedrichsdorf (DE); STROEDER, Michael, D-61267 Neu-Anspach (DE); WEBER, Peter, D-63546 Hammersbach (DE)
(74) Vertreter: KEIL & SCHAAFHAUSEN
(86) Internationale Anmeldenummer: EP9801839
(87) Internationale Veröffentlichungsnummer: WO98048058

(56) Entgegenhaltungen:
- EP-A- 0 630 975
- DE-A- 3 317 701
- DE-A- 4 426 623
- DE-A- 19 621 412
- FR-A- 2 360 670
- US-A- 5 137 566
- US-A- 5 387 274
- US-A- 5 690 717
- PATENT ABSTRACTS OF JAPAN vol. 017, no. 678 (C-1141), 13. Dezember 1993 & JP 05 222423 A (NIPPON STEEL CORP), 31. August 1993

## Beschreibung

Die Erfindung betrifft ein Verfahren zum Erzeugen von Eisencarbid (Fe₃C) aus körnigem Eisenschwamm, welcher mit einem Kohlenstoffgehalt von höchstens 1 Gew.-% aus einer Eisenerz-Reduktionsanlage kommt, in welcher er als letzter Reduktionsstufe in einem Wirbelbett unter Zufuhr von Reduktionsgas bei Temperaturen im Bereich von 500 bis 800 °C behandelt wird, wobei das Reduktionsgas zu mindestens 90 Vol.-% (stickstofffrei gerechnet) aus Wasserstoff besteht, wobei man den körnigen Eisenschwamm durch eine Karburierstufe leitet und ihn darin mit einem methanhaltigen Gas bei Temperaturen im Bereich von 500 bis 800 °C bei einem Wassergehalt von höchstens 1,5 Vol.-% verwirbelt und aus der Karburierstufe ein Produkt abzieht, dessen gesamter Eisengehalt zu mindestens 80 Gew.-% als Fe₃C gebunden ist.

Ein solches Verfahren ist aus der DE 44 26 623 A1 bekannt, wobei die Karburierung in einem stationären Wirbelbett erfolgen kann. Aus den US-Patenten 5,527,379 und 5,603,748 ist die Direktreduktion von Eisenoxid bekannt, wobei man kömiges, eisenoxidhaltiges Material in mehreren Wirbelbetten mit heißem Reduktionsgas bei Temperaturen von 500 bis 900 °C in direkten Kontakt bringt.

In der EP 0 630 975 A1 wird ein Verfahren zur Reduktion und Aufkohlung eisenoxidhaltiger Feststoffe zu Eisencarbid offenbart, bei dem in einer ersten Verfahrensstufe eine Vorreduktion der Feststoffe erfolgt, bevor diese in einem nachfolgenden Verfahrensschritt vollständig reduziert und gleichzeitig zu Eisencarbid karburiert werden. Während die Vorreduktion in einer zirkulierenden Wirbelschicht erfolgt, wird die Karburierung in einer stationären Wirbelschicht durchgeführt. Nachteilig an diesem Verfahren ist die vergleichsweise geringe Aufkohlungsleistung des Eisenschwamms.

Aufgabe der vorliegenden Erfindung war es daher, ein Verfahren der eingangs genannten Art zur Verfügung zu stellen, welches sich durch eine bessere Effizienz der Karburierstufe auszeichnet.

Erfindungsgemäß wird diese Aufgabe durch ein Verfahren mit den Merkmalen des Anspruchs 1 gelöst. Vorteilhafte Ausgestaltungen der Erfindung sind Gegenstand von Unteransprüchen.

Um die Karburierung zu beschleunigen, arbeitet man bevorzugt bei Drücken im Bereich von 3 bis 10 bar.

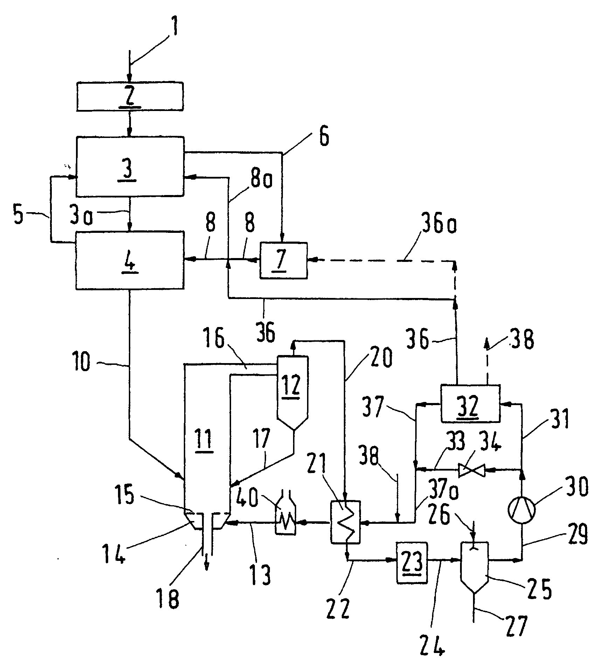

Ausgestaltungen des Verfahrens werden mit Hilfe der Zeichnung erläutert. Sie zeigt ein Ftießschema des Verfahrens.

Aus körnigem Eisenoxid, das in der Leitung (1) herangeführt wird, erzeugt man durch Reduktion zunächst Eisenschwamm mit einem Kohlenstoffgehalt von höchstens 1 Gew.-%. Die Reduktion kann in beliebiger, an sich bekannter Weise erfolgen. Eine vorteilhafte Arbeitsweise ist in den bereits erwähnten US-Patenten 5,527,379 und 5,603,748 beschrieben. Hierbei folgt auf eine Trocknungs- und Erhitzungsstufe (2) eine erste Reduktionsstufe (3) und eine darin anschließende zweite Reduktionsstufe (4). In beiden Reduktionsstufen erfolgt die Reduktion im Wirbelbett, wobei man als Reduktions- und Fluidisierungsgas heißes, wasserstoffhaltiges Gas verwendet. Die Temperaturen in beiden Stufen (3) und (4) liegen im Bereich von 500 bis 900°C. Die erste Stufe (3) ist als zirkulierende Wirbelschicht ausgestaltet, wobei man.hier zumindest teilweise durch die Leitung (5) gebrauchtes, H₂-haltiges Reduktionsgas aus der zweiten Stufe (4) zuführt. Das Abgas der ersten Stufe führt man in der Leitung (6) zurück zu einer Aufbereitungsanlage (7), in welcher man auch frisches wasserstoffreiches Gas erzeugt. Das Gas wird als heißes Reduktionsgas durch die Leitung (8) der zweiten Reduktionsstufe (4) zugeführt, in welcher die Feststoffe bevorzugt ein stationäres Wirbelbett bilden. Das Gas der Leitung (8) besteht zu mindestens 90 Vol% aus Wasserstoff. Ein Teilstrom des Reduktionsgases der Leitung (8) wird durch die Leitung (8a) zweckmäßigerweise direkt in die erste Stufe (3) geführt. Der Metallisierungsgrad im teilreduzierten Erz der Leitung (3a) liegt bei 50 bis 80 %.

Aus der zweiten Reduktionsstufe zieht man in der Leitung (10) körnigen Eisenschwamm mit einem Kohlenstoffgehalt von höchstens 1 Gew% ab. Diesen Eisenschwamm gibt man einem Wirbelschicht-Reaktor (11) auf, der mit einem Abscheidezyklon (12) verbunden ist. Zum Karburieren des Eisenschwamms führt man durch die Leitung (13) kohlenwasserstoffhaltiges Gas heran, das hauptsächlich aus Methan besteht. Dieses Gas tritt zunächst in eine Verteilkammer (14) ein und strömt dann durch einen Düsenboden (15) als Fluidisierungsgas aufwärts durch den Reaktor (11). Im Reaktor (11) liegen die Temperaturen im Bereich von 500 bis 800°C. Eine Gas-Feststoff-Suspension wird vom oberen Bereich des Reaktors (11) durch den Kanal (16) in den Abscheider (12) geführt und abgeschiedene Feststoffe gibt man durch die Leitung (17) zurück in den Reaktor (11). Was aus dem unteren Bereich des Reaktors (11) durch den Kanal (18) abgezogene Produkt besteht vor allem aus Eisencarbid, wobei mindestens 80 Gew% des gesamten Eisengehalts als Fe₃C gebunden sind. Dieses Produkt wir einer nicht dargestellten Kühlung zugeführt.

Feststoffhaltiges Gas verläßt den Abscheider (12) durch die Leitung (20) und gibt Wärme zunächst im Wärmeaustauscher (21) ab. Als Folge der Karburierung enthält das Gas der Leitung (20) einen beträchtlichen Anteil an Wasserstoff, so daß der H₂-Gehalt, wasserfrei gerechnet, bei mindestens 10 Vol% liegen wird. Zweckmäßigerweise sorgt man für einen H₂-Gehalt im Gas der Leitung (20) von 15 bis 40 Vol% (trocken gerechnet). Zum Entstauben wird das Gas durch die Leitung (22) zunächst einem Filter (23) aufgegeben und dann in der Leitung (24) in eine Naßwäsche (25) geführt. In der Wäsche (25) wird Waschlösung durch die Leitung (26) eingesprüht und gebrauchte, feststoffhaltige Waschlösung zieht man in der Leitung (27) ab. Gereinigtes Gas wird in der Leitung (29) durch das Gebläse (30) angesaugt. Es ist sehr vorteilhaft, den Wasserstoffgehalt des Gases zumindest teilweise abzutrennen und in der Reduktionsanlage zu nutzen. Zu diesem Zweck führt man das Gas ganz oder teilweise durch die Leitung (31) zu einer Trenneinrichtung (32) zum Abtrennen einer H₂-reichen Gasfraktion aus dem Gasgemisch. Falls gewünscht, kann ein Teilstrom des vom Gebläse (30) kommenden Gases durch die Bypass-Leitung (33) und das geöffnete Ventil (34) an der Trenneinrichtung (32) vorbeigeführt werden.

Die Trenneinrichtung (32) kann in an sich bekannter Weise zum Beispiel nach dem Prinzip der Druckwechseladsorption arbeiten oder als Membrantrennung ausgebildet sein. Ferner ist eine Gastrennung durch Tiefkühlung möglich. Aus der Trenneinrichtung (32) wird neben einer H₂-reichen Gasfraktion, die in der Leitung (36) abgeführt wird, ein Restgas erhalten, das man in der Leitung (37) abzieht. Wenn, wie zum Beispiel beim Verwenden einer Druckwechsel-Adsorptionsanlage, ein Spülgas verwendet wird, zieht man dieses in der gestrichelt eingezeichneten Leitung (38a) ab. Das Restgas der Leitung (37) wird mit dem Gas der Leitung (33) gemischt und durch Methan aus der Leitung (38) aufgestärkt. Das Gasgemisch, das als Karburierungsgas dient, wird in der Leitung (37a) zum Erhitzen zunächst durch den Wärmeaustauscher (21) und dann durch den gefeuerten Erhitzer (40) geführt, bevor es durch die Leitung (13) in den Reaktor (11) eingespeist wird.

Ist das H₂-reiche Gas der Leitung (36) bereits als Reduktionsgas geeignet, so kann man es direkt dem Reduktionsgas der Leitung (8) zumischen. Anderenfalls führt man dieses Gas durch die gestrichelt eingezeichnete Leitung (36 a) zur Aufbereitungsanlage (7).

### Beispiel:

In einer der Zeichnung entsprechenden Verfahrensführung geht es um die Produktion von 600 000 t Fe₃C pro Jahr aus einem Eisenerz mit einem Fe-Gehalt von 67 Gew%, der zu 96 Gew% aus Fe₂O₃ besteht. Neben anderer Gangart enthält das Erz 2,4 Gew% SiO₂. Die Daten sind teilweise berechnet. In der ersten Reduktionsstufe (3), die als zirkulierende Wirbelschicht ausgebildet ist, liegt die Feststofftemperatur bei 630°C und im stationären Wirbelbett der zweiten Reduktionsstufe (4) bei 640°C. Das Reduktionsgas der Leitung (8) besteht zu 90 Vol% aus H₂ und enthält noch 9 Vol% N₂ und 1 Vol% H₂O.

Der Eisenschwamm der Leitung (10) hat einen Gehalt an metallischem Fe von 88,0 Gew.%, einen FeO-Gehalt von 8,5 Gew.%, und er enthält 3,5 Gew.% SiO₂, der Kohlenstoffgehalt ist verschwindend gering.

Zum Karburieren führt man dem Reaktor (11) 63,6 t Eisenschwamm pro Stunde zu, der Druck im Reaktor liegt bei 4 bar, die Temperatur beträgt 600°C. In den verschiedenen Leitungen strömen folgende Gasmengen, wobei deren Temperatur und deren Komponenten CH₄, H₂ und H₂O in der Tabelle angegeben sind.

| Leitung | 13 | 20 | 31 | 33 | 36 | 37 | 38 |
|---|---|---|---|---|---|---|---|
| Gas-menge (Nm³/h) | 128.400 | 135.700 | 49.800 | 85.500 | 14.300 | 33.600 | 9.300 |
| Temperatur (°C) | 730 | 600 | 85 | 60 | 40 | 40 | 25 |
| CH₄ (Vol.%) | 79,2 | 69,6 | 69,6 | 69,6 | -- | 98,7 | 100 |
| H₂ (Vol.%) | 19,8 | 29,5 | 29,5 | 29,5 | 100 | -- | -- |
| H₂O (Vol.%) | 1 | 0,9 | 0,9 | 0,9 | -- | 1,3 | -- |

Die Trenneinrichtung (32) ist eine Druckwechsel-Adsorptionsanlage, man zieht durch die Leitung (38) 9300 Nm³/h CH₄ ab. Das aus dem Reaktor (11) abgezogene Produkt besteht zu 89 Gew.% aus Fe₃C, zu 8 Gew.% aus FeO und zu 3 Gew.% aus SiO₂.

## Patentansprüche

1. Verfahren zum Erzeugen von Eisencarbid (Fe₃C) aus kömigem Eisenschwamm, welcher mit einem Kohlenstoffgehalt von höchstens 1 Gew.-% aus einer Eisenerz-Reduktionsanlage kommt, in welcher er als letzter Reduktionsstufe in einem Wirbelbett unter Zufuhr von Reduktionsgas bei Temperaturen im Bereich von 500 bis 800 °C behandelt wird, wobei das Reduktionsgas zu mindest 90 Vol.-%, stickstofffrei gerechnet, aus Wasserstoff besteht, wobei man den körnigen Eisenschwamm durch eine Karburierstufe leitet und ihn darin mit einem methanhaltigen Gas bei Temperaturen im Bereich von 500 bis 800 °C bei einem Wassergehalt im Gas von höchstens 1,5 Vol.-% verwirbelt und aus der Karburierstufe ein Produkt abzieht, dessen gesamter Eisengehalt zu mindestens 80 Gew.-% als Fe₃C gebunden ist, wobei die Karburierstufe als zirkulierende Wirbelschicht ausgebildet ist, welche aus einem Wirbelschicht-Reaktor (11), einem mit dem oberen Bereich des Reaktors verbundenen Abscheider (12) zur Feststoff-Abtrennung und einer Feststoff-Rückführung (17) besteht, wobei die Feststoff-Rückführung den Abscheider mit dem unteren Bereich des Reaktors verbindet, dass man pro Stunde mindestens das fünffache Gewicht an Feststoffen, verglichen mit dem Feststoffinhalt im Reaktor (11), vom Abscheider in den Reaktor zurückführt und den Eisenschwamm im Wirbelbett-Reaktor bei Temperaturen von 500 bis 800 °C mit dem Methan enthaltenden Gas als Fluidisierungsgas verwirbelt.

2. Verfahren nach Anspruch 1, **dadurch gekennzeichnet, dass** man vom oberen Bereich des Reaktors ein Feststoffe enthaltendes Abgas zum Abscheider (12) führt und aus dem Abscheider ein wasserstoffhaltiges Abgas (20) mit einem H₂-Gehalt, wasserfrei gerechnet, von 10 bis 40 Vol.-% abzieht, dass man aus dem wasserstoffhaltigen Abgas Wasserstoff abtrennt und diesen Wasserstoff mindestens teilweise in die Reduktionsanlage leitet, und dass man dem Abgas Methan zugibt und das Abgas in den Wirbelschicht-Reaktor zurückführt.

3. Verfahren nach Anspruch 1 oder 2, **dadurch gekennzeichnet, dass** der Druck im Wirbelschicht-Reaktor 3 bis 10 bar beträgt.

## Claims

1. A process of producing iron carbide (FE₃C) from granular sponge iron, which with a carbon content of not more that 1 wt-% comes from an iron-ore reduction plant in which it is treated in a fluidized bed as last reductions stage by supplying reduction gas at temperatures in the range from 500 to 800°C, where the reduction gas contains at least 90 vol-% hydrogen (calculated nitrogen-free), where the granular sponge iron is conducted through a carburisation stage and fluidized therein at temperatures in the range from 500 to 800°C with a gas including methane, where the water content of the gas is not more than 1,5 vol- %, and where a product is withdrawn from the carburization step whose total iron content is bound as FE₃C for at least 80 wt-%, wherein the carburization stage is formed as a circulating fluidized bed, comprising a fluidized bed reactor (11), a separator (12) connected with the upper portion of the reactor for separating solids and a solids return line (17), wherein the solids return line connects the separator with the lower portion of the reactor, wherein per hour at least five times the weight of solids, as compared to the solids content in the reactor (11), is recirculated from the separator into the reactor, and wherein the iron sponge is fluidized in the fluidized bed reactor at temperatures of 500 to 800°C with the gas including methane as fluidizing gas.

2. A process according to claim 1, **characterized in that** from the upper portion of the reactor an exhaust gas including solids is supplied to the separator (12) and from the separator an exhaust gas (20) with an H₂ content of 10 to 40 vol-%, calculated water-free is withdrawn, that from the hydrogen containing exhaust gas hydrogen is separated and this hydrogen at least partially is conducted into the reduction plant, and that methane is added to the exhaust gas and that the exhaust gas is recirculated into the fluidized bed reactor.

3. A process according to claim 1 or 2, **characterized in that** the pressure in the fluidized bed reactor is 3 to 10 bar.

## Revendications

1. Procédé de production de carbure de fer (Fe₃C) à partir de fer spongieux granulé sortant d'une installation de réduction de mineral de fer avec une teneur de carbone de 1 % en poids au plus, dans laquelle il est traité en tant que dernière étage de réduction dans un lit fluidisé sous apport de gaz de réduction à des températures dans une zone de 500 à 800 °C, le gaz de réduction étant composé au moins à 90% en volume d'hydrogène, calculé sans azote, où on mène le fer spongieux granulé à travers un étage de carburation dans lequel il est fluidisé avec un gaz contenant du méthane à des températures dans une zone de 500 à 800 °C et à une teneur d'eau du gaz de 1,5 % en volume au plus et où on soutire un produit de l'étage de carburation dont la teneur totale en fer est fixée au moins à 80% en poids en forme de Fe₃C, où l'étage de carburation est un lit fluidisé circulant, qui est composé d'un réacteur à lit fluidisé (11), d'un décanteur (12) pour la séparation de matières solides relié à la zone supérieure du réacteur et d'un retour de matières solides (17), le retour de matières solides reliant le décanteur à la zone inférieure du réacteur, où on retoume par heure un poids de matières solides au moins quintuple comparé au contenu en matières solides du réacteur (11) du décanteur au réacteur et où on fluidise le fer spongieux dans le réacteur à lit fluidisé avec le gaz contenant du méthane en tant que gaz de fluidisation à des températures de 500 à 800 °C.

2. Procédé suivant la revendication 1, **caractérisé en ce que** l'on mène un effluent gazeux contenant des matières solides de la zone supérieure du réacteur au décanteur (12) et que l'on soutire du décanteur un effluent gazeux (20) contenant de l'hydrogène avec un contenu de H₂, calculé sans eau, de 10 à 40% en volume, **en ce que** l'on sépare de l'hydrogène de l'effluent gazeux contenant de l'hydrogène et que l'on introduit cet hydrogène au moins en partie dans l'installation de réduction, et **en ce que** l'on ajoute du méthane à l'effluent gazeux et que l'on ramène l'effluent gazeux dans le réacteur à lit fluidisé.

3. Procédé suivant la revendication 1 ou 2, **caractérisé en ce que** la pression dans le réacteur à lit fluidisé est comprise entre 3 et 10 bars.
